# EUROPÄISCHE PATENTSCHRIFT

(11) **EP 0 790 717 B1**
(45) Veröffentlichungstag und Bekanntmachung des Hinweises auf die Patenterteilung: **14.06.2006**
(21) Anmeldenummer: 96102315.7
(22) Anmeldetag: 16.02.1996
(51) Int. Cl.: H04B 10/12, H04N 7/22, H04N 7/20

(54) **Vorrichtung zur Übertragung mehrerer empfangener breitbandiger Funksignale zu einem Signalempfänger und Signalempfänger dazu**
Device for transmittimg several received broadband radio signals to a signal receiver and signal receiver therefor
Dispositif pour la transmission de plusieurs signaux radio reçus à bande large à un récepteur de signaux ainsi qu'un récepteur associé

(43) Veröffentlichungstag der Anmeldung: 20.08.1997
(73) Patentinhaber: ROBERT BOSCH GMBH, 70442 Stuttgart (DE)
(72) Erfinder: Schunk, Nikolaus, Dr. Dipl.-Ing., D-64372 Ober-Ramstadt (DE); Rech, Wolf-Henning, Dr., D-71229 Leonberg (DE)

(56) Entgegenhaltungen:
- EP-A- 0 031 014
- EP-A- 0 570 198
- DE-A- 4 334 440
- US-A- 4 726 644
- US-A- 5 377 035
- PATENT ABSTRACTS OF JAPAN vol. 006, no. 254 (E-148), 14.Dezember 1982 & JP-A-57 152739 (NIPPON DENSHIN DENWA KOSHA), 21.September 1982,

## Beschreibung

### Stand der Technik

Die Erfindung geht aus von einer Vorrichtung zur Übertragung mehrerer empfangener breitbandiger Funksignale zu einem Signalempfänger nach dem Oberbegriff des Anspruchs 1, sowie von einem Signalempfänger nach dem Oberbegriff des Anspruchs 7. Aus dem Artikel "Zukunftssichere SAT-Anlagen", in der Zeitschrift "Funkschau", 19/92, Seiten 64, 65 ist eine Satellitenempfangsanlage bekannt, bei der von einem Satelliten gesendete Funksignale mit horizontaler oder vertikaler Polarisation jeweils mittels einer Satellitenantenne empfangen und jeweils über ein getrenntes Kabel an einen Satellitenempfänger weitergeleitet werden. Dazu weist der Satellitenempfänger einen Eingang für das horizontal polarisierte Funksignal und einen weiteren Eingang für das vertikal polarisierte Funksignal auf. Außerdem ist eine Gemeinschaftsantennenanlage gezeigt, bei der mehrere empfangene verschieden polarisierte Funksignale über einen Matrixschalter ("Multiswitch") an mehrere Satellitenempfänger weitergeleitet werden, wobei in dem Matrixschalter jedem Satellitenempfänger wahlweise eines der empfangenen Funksignale zuleitbar ist. Wird eine solche Anlage um weitere Antennen erweitert, so müssen weitere Umschalter installiert oder Eingänge am Satellitenempfänger vorgesehen sein, um auch die mit diesen Antennen empfangenen Funksignale auswählen zu können. Eine weitere Satellitengemeinschaftsantennenanlage ist aus dem Aufsatz "Eine für alle" von Eckhard Mtiller in der Zeitschrift "Funk-Spezial 28", Seiten 24 bis 26 gezeigt.

Die Patentanmeldung DE-A-43 34 440 offenbart eine Vorrichtung zur Übertragung mehrerer empfangener breitbandiger Funksignale, die sich in ihrer Polarisationsrichtung unterscheiden können, zu wenigstens einem Signalempfänger, derart ausgelegt, dass alle als gleichfrequente Frequenzbänder empfangenen Signale in serielle, aneinandergereihte Frequenzbänder niedriger Frequenz umgewandelt werden, und zu einem breiten Frequenzband zusammengefaßt werden. Im Anschluß hieran wird das Frequenzband einem Elektrooptischen-Wandler zugeführt und die optischen Signale werden zu den einzelnen Teilnehmern geleitet.

Die Patentanmeldung US-A-5 377 035 offenbart eine Vorrichtung zur Übertragung mehrerer empfangener breitbandiger Funksignale, die sich in ihrer Polarisationsrichtung unterscheiden, zu einem Signalempfänger, wobei zwei der empfangenen Funksignale je einer Modulationsvorrichtung zugeführt sind, in der eine Modulation des jeweiligen Funksignals auf eine vorgegebene für jedes Funksignal jeweils unterschiedliche Trägerwellenlänge erfolgt, wobei den Modulationsvorrichtungen eine für die Übertragung von den zwei modulierten Trägerwellenlängen gemeinsame Übertragungsleitung zu einem Signalempfänger nachgeschaltet ist, wobei die Trägerwellenlängen im optischen Wellenlängenbereich liegen und wobei die Übertragungsleitung eine optische Wellenleitfaser ist.

### Vorteile der Erfindung

Die erfindungsgemäße Vorrichtung mit den kennzeichnenden Merkmalen des Anspruchs 1 hat demgegenüber den Vorteil, daß unabhängig von der Anzahl der empfangenen, breitbandigen Funksignale für jeden Signalempfänger nur eine einzige Übertragungsleitung vorgesehen sein muß, um dem Signalempfänger sämtliche empfangene Funksignale für eine dortige Auswahl zur Verfügung zu stellen. Dies ist insbesondere vorteilhaft, wenn mehrere Antennen, von denen bereits jede zwei orthogonal polarisierte breitbandige Funksignale empfängt, für Funksignale unterschiedlicher Empfangsrichtung vorgesehen sind. Ist die Bandbreite des Funksignals auch noch sehr groß, so erfolgt auch bei einer Aufteilung des Empfangsbandes dieses Funksignals in Einzelbänder stets eine Übertragung über eine einzige Übertragungsleitung. Außerdem kann eine Auswahl des jeweiligen breitbandigen Funksignals aus der Vielzahl der verschiedenen empfangenen breitbandigen Funksignale im Signalempfänger selbst erfolgen, wodurch sich der Matrixschalter erübrigt. Vor allem bei einer nachträglichen Systemerweiterung durch Installation weiterer Antennen oder durch Erhöhung der Bandbreite der Funksignale und deren Aufteilung in Einzelbänder ist keine Erweiterung der Eingänge des Signalempfängers oder eine Erweiterung eines Matrixschalters nötig, um die Erweiterung auch im Signalempfänger zur Auswahl zu nutzen. Außerdem ist die

Vorrichtung in vorteilhafter Weise für eine Gemeinschaftsantennenanlage geeignet, da in jedem angeschlossenen Signalempfänger unabhängig von der Auswahl eines Funksignals in einem anderen Signalempfänger eine eigene Auswahl getroffen werden kann. Die Bereitstellung von im optischen Bereich liegenden Trägerwellenlängen und deren Weiterleitung über eine optische Wellenleitfaser bringt den Vorteil mit sich, daß eine besonders breitbandige Übertragung über nur eine Übertragungsleitung möglich ist, wodurch besonders viele Funksignale mit niedrigem Übersprechen übertragbar sind. Außerdem sind die im optischen Bereich ohne Verstärkung überbrückbaren Kabellängen wesentlich länger, als im elektrischen Bereich.

Die Übertragung von Kennungsinformationen zum Signalempfänger bringt den weiteren Vorteil mit sich, daß damit dem Signalempfänger Informationen zur Verfügung gestellt werden, mittels denen Frequenzänderungen der Trägerwellenlängen ohne bauliche Änderungen im Signalempfänger kompensierbar sind. Dies ist insbesondere vorteilhaft, wenn beispielsweise durch Reparaturarbeiten, oder für nachträgliche Systemerweiterungen ein neues optisches Sendemittel mit einer neuen Abstrahlwellenlänge eingebaut wird, oder wenn die optischen Sendemittel durch Umwelteinflüsse in ihrer Trägerzaellenlänge driften.

Durch die in den dem Anspruch 1 untergeordneten Ansprüchen aufgeführten Maßnahmen sind vorteilhafte Weiterbildungen und Verbesserungen der im Anspruch 1 angegebenen Vorrichtung möglich.

Es ergibt sich der weitere Vorteil, daß sich der Schaltungsaufwand und die Herstellungskosten minimieren, wenn die Modulationsvorrichtungen den Ansteuerstrom von optischen Sendemitteln modulieren, die verschiedene Abstrahlwellenlängen aufweisen.

Die Vorschaltung eines Sternkopplers vor die Übertragungsleitungen stellt ein besonders zuverlässiges und preiswertes, sowie leicht integrierbares Bauelement zur Verteilung der optischen Ausgangssignale der optischen Sendemittel an mehrere Teilnehmer zur Verfügung.

Die Zusammenfassung der optischen Ausgangssignale der optischen Sendemittel mittels des Sternkopplers und die Aufteilung am Ende einer weiteren optischen Faser mittels eines Leistungsteilers dient in vorteilhafter Weise der Reduktion des Leitungsaufwandes der Übertragungsvorrichtung, da für mehrere relativ nahe beieinanderliegende Signalempfänger der Weg zwischen Leistungsteiler und Sternkoppler über nur eine einzige optische Faser führt.

Die Vorschaltung eines Verstärkers vor die Modulationsvorrichtungen bewirkt den Vorteil, daß die Signalpegel der Funksignale in den Modulationsvorrichtungen so angepaßt werden können, daß eine optimale Aussteuerung der Modulationsvorrichtungen erfolgt.

Es gestaltet sich technisch besonders einfach und daher kosten- und aufwandsparend, wenn die Kennungsinformationen den modulierten Trägerwellenlängen oder den Funksignalen aufmodulierbar sind.

Der erfindungsgemäße Signalempfänger mit den kennzeichnenden Merkmalen des Anspruchs 7 hat den Vorteil, daß mehrere mit einem breitbandigen Funksignalen modulierte Trägerwellenlängen demoduliert werden und eines der Funksignale dann ausgewählt werden kann, wodurch für die Auswahl aus mehreren breitbandigen Funksignalen im Signalempfänger nur ein einziger Eingang für eine Übertragungsleitung vorgesehen sein muß.

Der Aufwand für die Vorrichtung zur Übertragung der Funksignale vermindert sich weiter, wenn nur ein einziges abstimmbares Filter zur Auskopplung einer durch die Abstimmung auswählbaren, übertragenen, modulierten Trägerwellenlänge angeordnet ist.

Die Auswertung der Kennungsinformationen mittels einer Kennungsidentifikationseinrichtung bringt den weiteren Vorteil mit sich, daß Frequenzänderungen der Trägerwellenlängen ohne bauliche Änderungen im Signalempfänger kompensierbar sind. Dies ist insbesondere vorteilhaft, wenn beispielsweise durch Reparaturarbeiten, oder für nachträgliche Systemerweiterungen ein neues optisches Sendemittel mit einer neuen Abstrahlwellenlänge eingebaut wird, oder wenn die optischen Sendemittel durch Umwelteinflüsse in ihrer Trägerwellenlänge driften.

### Zeichnung

Ausführungsbeispiele der Erfindung sind in der Zeichnung dargestellt und in der nachfolgenden Beschreibung näher erläutert.

Es zeigen:
Figur 1 ein erstes Ausführungsbeispiel für eine Satellitenempfangsanlage,
Figur 2 ein weiteres Ausführungsbeispiel für eine Satellitenempfangsanlage,
Figur 3a ein Empfangsfrequenzspektrum für ein horizontal polarisiertes breitbandiges Funksignal,
Figur 3b ein Empfangsfrequenzspektrum für ein vertikal polarisiertes breitbandiges Funksignal,
Figur 3c ein Zwischenfrequenzspektrum für ein horizontal polarisiertes breitbandiges Funksignal,
Figur 3d ein Zwischenfrequerizspektrum für ein vertikal polarisiertes breitbandiges Funksignal,
Figur 3e ein Spektrum eines in einer Übertragungsleitung vorhandenen Signals,
Figur 3f ein Spektrum eines horizontal polarisierten breitbandigen Funksignals am Ausgang eines frequenzselektiven Filters,
Figur 3g ein Spektrum eines vertikal polarisierten breitbandigen Funksignals am Ausgang eines frequenzselektiven Filters,
Figur 3h ein Spektrum eines horizontal polarisierten breitbandigen Funksignals nach der Demodulation,
Figur 3i ein Spektrum eines vertikal polarisierten breitbandigen Funksignals nach der Demodulation.

### Beschreibung der Ausführungsbeispiele

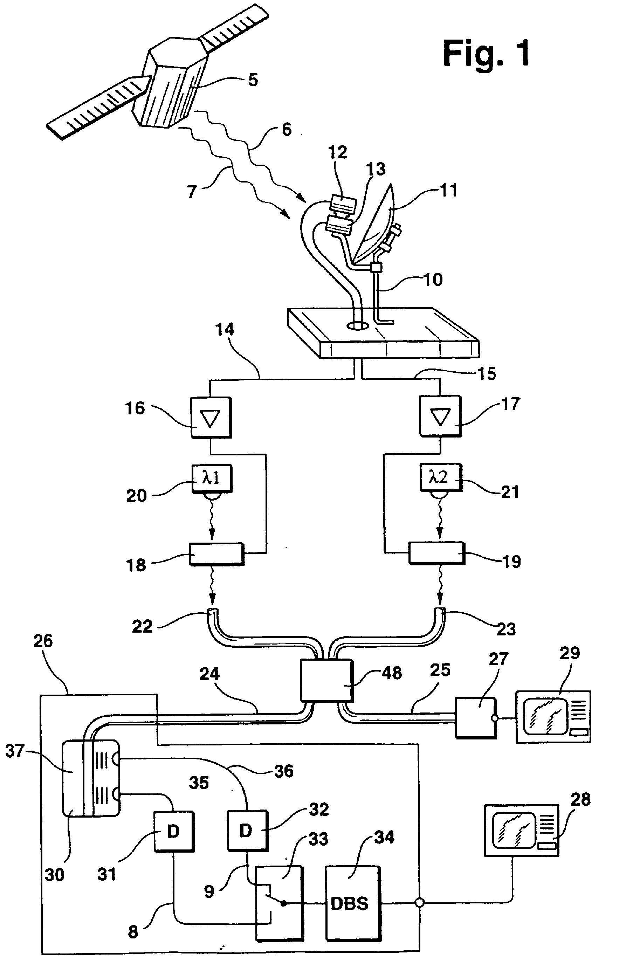

In Figur 1 ist ein Satellit 5 dargestellt, der ein erstes, horizontal polarisiertes breitbandiges Funksignal 6 und ein zweites, vertikal polarisiertes breitbandiges Funksignal 7 aussendet. Eine Satellitenantenne 10 umfaßt einen Reflektor 11, einen ersten Empfangskonverter 13 und einen zweiten Empfangskonverter 12. Die beiden Empfangskonverter 12, 13 sind in bekannter Weise als LNC-Konverter ausgebildet. Die beiden Empfangskonverter 12, 13 sind dabei so vor dem Reflektor 11 angebracht, daß das horizontal polarisierte Funksignal 6 mit einem und das vertikal polarisierte Funksignal 7 mit dem anderen der beiden Empfangskonverter 12, 13 empfangbar ist. Dem zweiten Empfangskonverter 12 ist unter Zwischenschaltung einer ersten Antennenleitung 15 ein erster Verstärker 17 nachgeschaltet. Ebenso ist dem ersten Empfangskonverter 13 unter Zwischenschaltung einer zweiten Antennenleitung 14 ein zweiter Verstärker 16 nachgeschaltet. Dem zweiten Verstärker 16 ist eine erste Modulationsvorrichtung 18 und dem ersten Verstärker 17 eine zweite Modulationsvorrichtung 19 nachgeschaltet. Ein erstes optisches Sendemittel 20 ist als Laserdiode mit einer Abstrahlwellenlänge λ₁ vorgesehen. Ein zweites optisches Sendemittel 21 ist als Laserdiode mit einer Abstrahlwellenlänge λ₂ vorgesehen. Die Modulationsvorrichtungen 18, 19 modulieren die optischen Ausgangssignale der optischen Sendemittel 18, 19. Die Abstrahlwellenlängen λ₁,λ₂ dienen also als Trägerwellenlängen λ₁, λ₂. Das modulierte optische Ausgangssignal des ersten optischen Sendemittels 20 gelangt in einen ersten Lichtleiter 22, der ebenso wie ein zweiter Lichtleiter 23 einem Sternkoppler 48 zugeführt ist. Der zweite Lichtleiter 23 empfängt dabei das modulierte optische Ausgangssignal des zweiten optischen Sendemittels 21. Ein Ausgang des Sternkopplers 48 ist über eine erste Übertragungsleitung 24 mit einem ersten Signalempfänger 26 verbunden, der ein erstes frequenzselektives Filter 30 und ein zweites frequenzselektives Filter 37 aufweist, denen die erste Übertragungsleitung 24 zugeführt ist. Ein weiterer Ausgang des Sternkopplers 48 ist über eine zweite Übertragungsleitung 25 mit einem zweiten Signalempfänger 27 verbunden. Vom Ausgang des ersten frequenzselektiven Filters 30 führt eine erste Empfangsleitung 35 zu einer ersten Demodulationsvorrichtung 31, an deren Ausgang eine erste Schalterzuleitung 8 angeschlossen ist. Ebenso ist am Ausgang des zweiten frequenzselektiven Filters 37 eine zweite Empfangsleitung 36 angeordnet, der eine zweite Demodulationsvorrichtung 32 nachgeschaltet ist, an deren Ausgang sich eine zweite Schalterzuleitung 9 anschließt. Die Schalterzuleitungen 8, 9 sind einer Auswahlvorrichtung 33 zugeführt, deren Ausgang an einen Decoder 34 angeschlossen ist. Der Ausgang des Decoders 34 bildet den Ausgang des ersten Signalempfängers 26 und ist mit einem ersten Rundfunkgerät 28 verbunden. Der Aufbau des zweiten Signalempfängers 27 ist identisch zu dem des ersten Signalempfängers 26 und deshalb hier nicht im Detail dargestellt. Der Ausgang des zweiten Signalempfängers 27 ist an ein zweites Rundfunkgerät 29 angeschlossen.

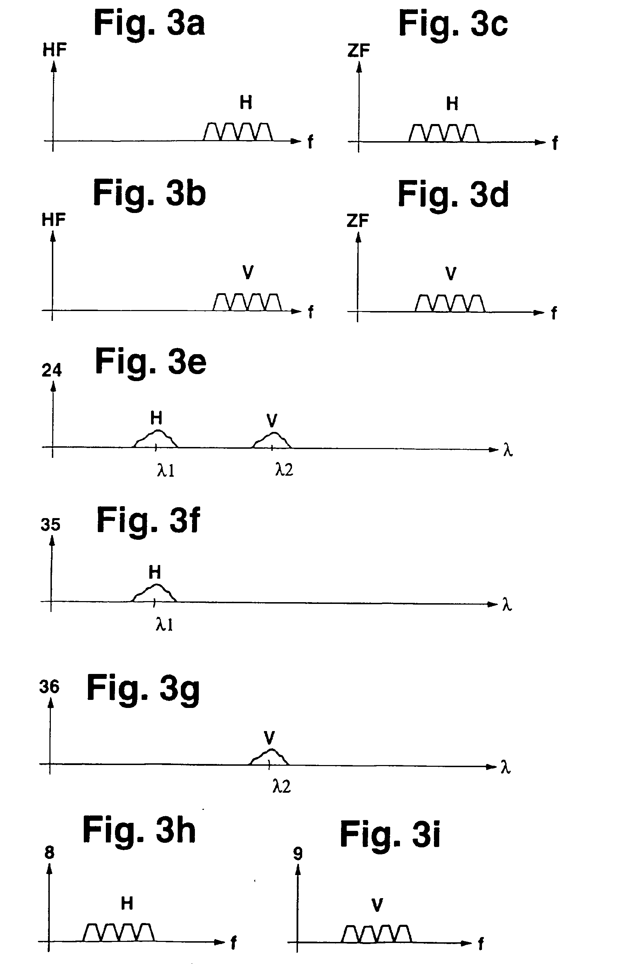

Zur Erläuterung der Funktionsweise der in Figur 1 dargestellten Vorrichtung wird auf die Figuren 3a bis i Bezug genommen. Der zweite Empfangskonverter 12 ist in diesem Beispiel so angeordnet, daß er zum Empfang der vertikal polarisierten breitbandigen Funksignale 7 des Satelliten 5 geeignet ist, während der erste Empfangskonverter 13 horizontal polarisierte breitbandige Funksignale 6 empfängt. Mittels des ersten Empfangskonverters 13 erfolgt außerdem eine Umsetzung des empfangenen vertikal polarisierten Funksignals 7 von dem vom Satelliten 5 festgelegten Empfangsfrequenzbereich (EF) in einen Zwischenfrequenzbereich (ZF), welcher niedriger gelegen ist als der Empfangsfrequenzbereich (EF) des empfangenen vertikal polarisierten Funksignals 7. Ebenso bewirkt der zweite Empfangskonverter 13 eine Frequenzumsetzung des empfangenen, horizontal polarisierten Funksignals 6 aus dem Empfangsfrequenzbereich (EF) in den Zwischenfrequenzbereich (ZF). Die Antennenleitungen 14, 15 sind beispielsweise als Koaxialkabel ausführbar. In den Figuren 3a und 3b sind die empfangenen Funksignale 6, 7 im Empfangsfrequenzbereich und in den Figuren 3c und 3d die in den Zwischenfrequenzbereich umgesetzten Funksignale 6, 7 beispielhaft schematisch dargestellt. Das horizontal polarisierte breitbandige Funksignal 6 weist dabei beispielhaft mehrere Einzelfrequenzbänder auf, die nebeneinander angeordnet sind und den aus dem Satellitenfunk bekannten Transpondern entsprechen. Das vertikal polarisierte breitbandige Funksignal 7 weist ebenfalls mehrere Transponderfrequenzbänder auf, die um eine halbe Transponderbandbreite gegen das Frequenzband des horizontal polarisierten breitbandigen Funksignals 6 verschoben sind. Die Bandbreite der Funksignale 6, 7 beträgt beispielweise 1 GHz. Das horizontal polarisierte Funksignal 6 gelangt über den zweiten Verstärker 16 zur ersten Modulationsvorrichtung 18, in der das verstärkte, horizontal polarisierte Funksignal 6 auf die erste Trägerwellenlänge λ₁ aufmoduliert wird. Der zweite Verstärker 16 ist als Regelverstärker ausgeführt und bewirkt eine Anpassung des Signalpegels an die erste Modulationsvorrichtung 18, so daß bezüglich Rauschen und Verzerrungen eine optimale Aussteuerung erfolgt. Die modulierte erste Trägerwellenlänge λ₁ gelangt zum ersten optischen Sendemittel 20, das die modulierte erste Trägerwellenlänge λ₁ in Form eines optischen frequenzmodulierten Signals in den ersten Lichtleiter 22 einkoppelt. Ebenso wie hier für das horizontal polarisierte Funksignal 6 beschrieben, gelangt das vertikal polarisierte Funksignal 7 über den ersten Verstärker 17 zur zweiten Modulationsvorrichtung 19, wo es zur Modulation der zweiten Trägerwellenlänge λ₂ des zweiten optischen Sendemittels 21 dient, woraufhin dieses ein optisches, frequenzmoduliertes Signal in den zweiten Lichtleiter 23 einkoppelt.

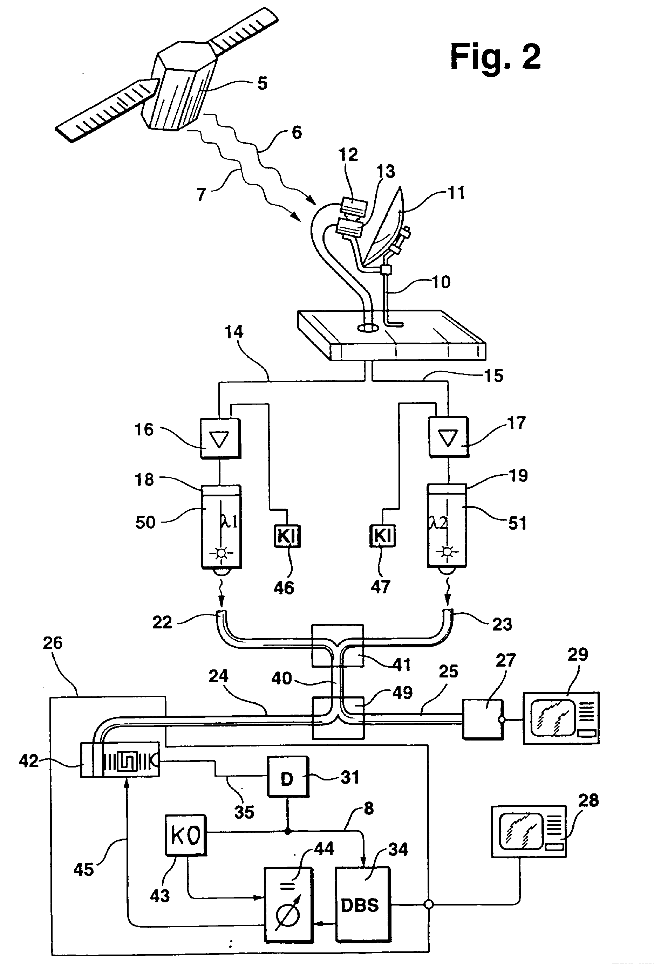

Die beiden Lichtleiter 22, 23 sind am Sternkoppler 48 angeschlossen, in dem eine Verteilung der eingekoppelten optischen frequenzmodulierten Signale zu gleichen Anteilen in die Übertragungsleitungen 24, 25 erfolgt. In Figur 3e ist das Spektrum des in der ersten Übertragungsleitung 24 ebenso wie in der zweiten Übertragungsleitung 25 vorhandenen optischen Signals dargestellt. Die optischen Sendemittel 20, 21 sind vorzugsweise als Laserdioden ausgeführt. Diese weisen ein eigenes breitbandiges Spektrum auf, welches nach der Modulation die Form der Spektren der Funksignale 6, 7 nicht mehr im Frequenzspektrum deutlich erkennen läßt. Diese spektrale Verbreiterung tritt vor allem bei der im Zusammenhang mit Figur 2 noch zu beschreibenden direkten Modulation des Laseransteuerstroms auf, da hier eine unerwünschte Frequenzmodulation (Chirp) erzeugt wird, die jedoch einen vernachlässigbaren Einfluß auf die Qualität der weiterzuverarbeitenden Funksignale 6, 7 hat. Im ersten Signalempfänger 26 gelangt dieses optische Signal zu den frequenzselektiven Filtern 30, 37, die so eingestellt sind, daß an deren Ausgängen jeweils nur der Frequenzbereich eines der beiden Funksignale 6, 7 ausgekoppelt wird. Figur 3f zeigt, daß beispielsweise am Ausgang des ersten frequenzselektiven Filters 30 nur der Frequenzbereich für das horizontal polarisierte Funksignal 6 in die erste Empfangsleitung 35 und am Ausgang des zweiten frequenzselektiven Filters 37 nur der Frequenzbereich des vertikal polarisierten Funksignals 7 in die zweite Empfangsleitung 36 ausgekoppelt wird. In den Demodulationsvorrichtungen 31, 32 erfolgt eine Demodulation der Ausgangssignale der frequenzselektiven Filter 30, 37, so daß auf den Schalterzuleitungen 8, 9 die beiden Funksignale 6, 7, die der Auswahlvorrichtung 33 zugeführt werden, wieder im Zwischenfrequenzbereich vorliegen. In der Auswahlvorrichtung 33 erfolgt eine Auswahl eines der beiden Funksignale 6, 7, welches an den Eingang des Decoders 34 geschaltet wird. Die Auswahl wird üblicherweise von einem Benutzer des Signalempfängers vorgenommen, der entweder manuell die Auswahlvorrichtung 33 betätigt oder über eine Eingabe in den Decoder 34 die Auswahl durch diesen vornehmen läßt. Im Decoder 34 erfolgt dann in bekannter Weise die weitere Frequenzumsetzung und Decodierung des empfangenen, ausgewählten Funksignals 6, 7 und die Weiterleitung des decodierten Signals an das Rundfunkgerät 28. In analoger Weise gelangt eines der beiden Funksignale 6, 7 über den zweiten Signalempfänger 27 zum zweiten Rundfunkgerät 29.

Die Auswahl, welches der beiden Funksignale 6, 7 in decodierter und demodulierter Form an das jeweilige Rundfunkgerät 28, 29 geführt werden soll, erfolgt also mit dieser Vorrichtung erst im Signalempfänger 26, 27. Somit ist es möglich, daß der Benutzer eines der beiden Signalempfänger 26, 27 die Auswahl nach seinen persönlichen Wünschen trifft, ohne die Auswahl des Benutzers des anderen Signalempfängers 26, 27 zu beeinflussen. Die frequenzselektiven Filter 30, 37 können z.B. als Fabry-Perot-Filter, Gitterspektrographen oder Array-Demultiplexer ausgebildet sein.

Anstelle über zwei Konverter können die Funksignale 6, 7 ebenso über einen geeigneten Doppelkonverter oder auch über einzelne Konverter mit je einem eigenen Reflektor empfangen werden. Es ist außerdem vorgesehen, nicht nur Funksignalbänder verschiedener Polarisationsrichtungen sondern auch die aus verschiedenen Richtungen (Orbitpositionen von Satelliten) empfangenen Funksignale auf verschiedene Trägerwellenlängen λ₁, λ₂ aufzumodulieren. Eine geeignete Wellenlängendifferenz zwischen den Trägerwellenlängen λ₁, λ₂ kann z.B. 5 nm betragen. Außerdem ist es in Zukunft vorgesehen größere Anzahlen von Transpondern in einem einzigen Funksignalband zu übertragen. Eine Aufteilung in Einzelfrequenzbänder erfolgt dann bereits unmittelbar nach dem Empfang im Konverter. Auch diese Einzelbänder können in der erfindungsgemäßen Weise auf verschiedene Trägerwellenlängen λ₁, λ₂ aufmoduliert werden.

In Figur 2 ist ein weiteres Ausführungsbeispiel für die Übertragungsvorrichtung dargestellt. Die Numerierung wurde dabei von der Figur 1 beibehalten. Diese Anordnung unterscheidet sich in folgenden Punkten von der in Figur 1 gezeigten Vorrichtung:

Das erste optische Sendemittel 20 ist in Form einer ersten Laserdiode 50 ausgeführt, deren Ansteuerstrom mittels der ersten Modulationsvorrichtung 18 moduliert ist. Das zweite optische Sendemittel 21 ist in Form einer zweiten Laserdiode 51 ausgeführt, deren Ansteuerstrom mittels der zweiten Modulationsvorrichtung 19 moduliert ist. Das von den Laserdioden 50, 51 ausgesendete Licht weist somit eine Intensitätsmodulation auf. Die unterschiedlichen Trägerwellenlängen λ₁, λ₂ sind im Falle der Laserdioden 50, 51 dadurch realisierbar, daß die Laserdioden 50, 51 unterschiedliche optische Abstrahlfrequenzen bzw. Abstrahlwellenlängen λ₁, λ₂ aufweisen. Vor dem ersten Verstärker 16 ist ein erster Kennungsgeber 46 angeordnet. Desgleichen ist vor dem zweiten Verstärker 51 ein zweiter Kennungsgeber 47 angeordnet. Die beiden Lichtleiter 22, 23 sind anstelle eines Sternkopplers 48 einem Signalkoppler 41, auch Y-Verbinder oder Combiner genannt, zugeführt, dessen Ausgang über eine weitere optische Faser 40 einem Leistungsteiler 49, auch Splitter genannt, zugeführt ist. Die Ausgänge des Leistungsteilers 49 bilden wiederum die Teilnehmerleitungen 24, 25. Im ersten Signalempfänger 26 ist anstelle der beiden frequenzselektiven Filter 30, 37 ein abstimmbares Filter 42 angeordnet, welches nur einen Ausgang aufweist. Die am Ausgang angeschlossene Empfangsleitung 35 führt zur Demodulationsvorrichtung 31. Der Ausgang des Demodulators 31 ist über die Schalterzuleitung 8 sowohl mit dem Decoder 34 verbunden, an den zum einen das Rundfunkgerät 28 angeschlossen ist und der zum anderen mit einer Abstimmvorrichtung 44 verbunden ist, als auch mit einem Kennungsdemodulator 43. Der Ausgang des Kennungsdemodulators 43 ist der Abstimmvorrichtung 44 zugeführt, deren Ausgang über eine Einstelleitung 45 zur Abstimmung des durchstimmbaren Filters 42 dient.

Die modulierten Trägerwellenlängen λ₁, λ₂ werden im Wellenlängenmultiplex über die weitere optische Faser 40 übertragen. Bei diesem Ausführungsbeispiel wird aus dem in der ersten Übertragungsleitung 24 geführten optischen Signal mittels des abstimmbaren Filters 42 nur der Frequenzbereich ausgekoppelt, der durch die Abstimmung des abstimmbaren Filters 42 über die Einstelleitung 45 auswählbar ist. Mittels des Decoders 34 gelangt dazu ein Signal an die Abstimmvorrichtung 44, welches festlegt, welcher Frequenzbereich von dem Benutzer des Decoders 34 ausgewählt wurde. Die beiden modulierten Trägerwellenlängen λ₁, λ₂ der Laserdioden 50, 51 werden in den Modulationseinrichtungen 18, 19 mit einer Kennungsmodulation versehen, welche am Ausgang des frequenzselektiven, abstimmbaren Filters 42 mittels des Kennungsdemodulators 43 erkennbar ist. Durch die Erkennung mittels des Kennungsdemodulators 43 und die Abstimmung des abstimmbaren Filters 42 mittels der Abstimmvorrichtung 44 wird eine Regelschleife gebildet, mittels derer eine Abstimmung des abstimmbaren Filters 42 so lange erfolgt, bis die im Kennungsdemodulator 43 erkannte Kennungsinformation gleichbedeutend ist mit dem über den Decoder 34 mitgeteilten auszuwählenden Frequenzbereich. Das in seiner Durchlaßfrequenz abgestimmte Filter 42 koppelt somit den die gewünschte, modulierte Abstrahlwellenlänge λ₁, λ₂ umfassenden Frequenzbereich aus, und die Demodulationsvorrichtung 31 liefert über die Schalterzuleitung 8 das entsprechende demodulierte Funksignal 6, 7 an den Decoder 34.

Durch die Kennungsmodulation und deren Demodulation ist es möglich, die Trägerwellenlängen λ₁, λ₂, z.B. bei Reparaturen oder Systemerweiterungen zu verändern, ohne daß eine bauliche Veränderung im Signalempfänger 26, 27 notwendig ist. Solche Systemerweiterungen umfassen vor allem weitere zu empfangende Funksignale mit unterschiedlichen Empfangsrichtungen. Die Abstimmung des abstimmbaren Filters 42 kann vorzugsweise über die Ausnutzung des thermooptischen Effekts aber ebenso auch elektrooptisch erfolgen. Als abstimmbares Filter 42 oder als frequenzselektives Filter 30, 37 sind auch abstimmbare Gitterspektrographen oder Array-Demultiplexer geeignet. Die Regelschleife sorgt dafür, daß immer der richtige Frequenzbereich ausgekoppelt wird. Die Umsetzung des Empfangsfrequenzbereichs der Funksignale in einen Zwischenfrequenzbereich bewirkt einen einfacheren Aufbau der Vorrichtung zur Übertragung, da der Zwischenfrequenzbereich niedriger als der Empfangsfrequenzbereich gewählt werden kann, weil die weitere Übermittlung nicht über Funk erfolgt.

Anstelle der getrennten Demodulationsvorrichtungen 31, 32 ist es ebenso vorgesehen, daß die Empfangsleitungen 35, 36 über einen Koppler zu einer Leitung vereinigt werden, die einer einzigen Demodulationsvorrichtung, analog der in Figur 2 dargestellten Demodulationsvorrichtung 31 zugeführt ist. Bevorzugt wird eine Kombination aus einem Sternkoppler 48 und Leistungsverzweigern 49 eingesetzt werden, wobei der Sternkoppler wenigstens soviele weitere optische Fasern 40, bzw. Ausgänge aufweist, wie er Eingänge, bzw. Lichtleiter 22, 23 aufweist und für den Anschluß einer die Anzahl der Ausgänge übersteigenden Anzahl von Signalempfängern 26, 27 dann Leistungsverzweiger 49 eingesetzt werden.

Ein bevorzugtes Anwendungsgebiet für die Vorrichtung zur Übertragung mehrerer empfangener breitbandiger Funksignale 6, 7 und den Signalempfänger 26, 27 ist eine Satellitengemeinschaftsantennenanlage. Hier ist speziell der Fernsehempfang von über DBS-Satelliten ausgestrahlten Programmen über auf Hausdächern montierbare Satellitenantennen als Anwendungsfeld vorgesehen, wobei die die Vorrichtung zur Übertragung mehrerer empfangener breitbandiger Funksignale 6, 7 dann direkt unterhalb der Satellitenantenne im Haus angeordnet werden kann.

## Patentansprüche

1. Vorrichtung zur Übertragung mehrerer empfangener breitbandiger Funksignale (6, 7), die sich in ihrer Polarisationsrichtung und/oder Empfangsrichtung und/oder ihrer Frequenzbandlage unterscheiden, zu wenigstens einem Signalempfänger (26, 27), wobei zur nachträglichen Systemerweiterung wenigstens zwei der empfangenen Funksignale (6, 7) je einer Modulationsvorrichtung (18, 19) zugeführt sind, in der eine Modulation des jeweiligen Funksignals (6, 7) auf eine vorgegebene für jedes Funksignal (6, 7) jeweils unterschiedliche Trägerwellenlänge (λ₁, λ₂) erfolgt, wobei den Modulationsvorrichtungen (18, 19) wenigstens eine für die Übertragung von wenigstens zwei der modulierten Trägerwellenlängen (λ₁, λ₂) gemeinsame Übertragungsleitung (24, 25) zum wenigstens einen Signalempfänger (26, 27) nachgeschaltet ist, wobei die Trägerwellenlängen (λ₁, λ₂) im optischen Wellenlängenbereich liegen und wobei die wenigstens eine Übertragungsleitung (24, 25) eine optische Wellenleitfaser ist, **dadurch gekennzeichnet, daß** zusammen mit den Funksignalen (6, 7) Kennungsinformationen zum Signalempfänger (26, 27) übertragbar sind, die zur Identifikation der Funksignale (6, 7) dienen.

2. Vorrichtung nach Anspruch 1, **dadurch gekennzeichnet, daß** optische Sendemittel (50, 51), vorzugsweise Laserdioden, vorgesehen sind, deren Abstrahlwellenlängen die Trägerwellenlängen (λ₁, λ₂) sind und daß die Modulationsvorrichtungen (18, 19) den Ansteuerstrom der optischen Sendemittel (50, 51) modulieren.

3. Vorrichtung nach Anspruch 1 oder 2, **dadurch gekennzeichnet, daß** der wenigstens einen Übertragungsleitung (24, 25) ein Sternkoppler (48) vorgeschaltet ist.

4. Vorrichtung nach Anspruch 3, **dadurch gekennzeichnet, daß** mehrere Teilnehmerleitungen (24, 25) vorgesehen sind, die am Ausgang eines Leistungsteilers (49) angeschlossen sind und daß dem Leistungsteiler (49) eine weitere optische Faser (40) vorgeschaltet ist, die dem Sternkoppler (48) nachgeschaltet ist.

5. Vorrichtung nach einem der Ansprüche 1 bis 4, **dadurch gekennzeichnet, daß** den Modulationsvorrichtungen (18, 19) jeweils wenigstens ein Verstärker (16, 17) vorgeschaltet ist.

6. Vorrichtung nach einem der Ansprüche 1 bis 5, **dadurch gekennzeichnet, daß** die Kennungsinformationen den Trägerwellenlängen (λ1, λ2) aufmodulierbar sind.

7. Signalempfänger zum Empfang wenigstens zweier über eine gemeinsame Übertragungsleitung (24, 25) übertragener, mit breitbandigen Funksignalen (6, 7) modulierter Trägerwellenlängen (λ₁, λ₂), derart ausgelegt daß wenigstens ein frequenzselektives Filter (30, 37, 42) zur Auskopplung einer der jeweiligen übertragenen, modulierten Trägerwellenlängen (λ₁, λ₂) vorgesehen ist und daß dem wenigstens einen frequenzselektiven Filter (30, 37, 42) eine Demodulationsvorrichtung (31, 32) nachgeschaltet ist, die zur Demodulation der jeweiligen ausgekoppelten, modulierten Trägerwellenlänge (λ₁, λ₂) zur Gewinnung des jeweiligen breitbandigen Funksignals (6, 7) dient und daß eine Auswahlvorrichtung (33) vorgesehen ist, mittels der eines der breitbandigen Funksignale (6, 7) auswählbar ist, **dadurch gekennzeichnet, daß** wenigstens ein abstimmbares, frequenzselektives Filter (42) zur Auskopplung einer der übertragenen, modulierten Trägerwellenlängen (λ₁, λ₂) vorgesehen ist, und daß mittels einer dem abstimmbaren Filter (42) nachgeschalteten Kennungsidentifikationseinrichtung (43) zusammen mit den Funksignalen (6, 7) übertragene Kennungsinformationen erkennbar sind und daß mittels der Auswahlvorrichtung (33, 44) anhand der erkannten Kennungsinformationen das abstimmbare Filter (42) einstellbar ist.

## Claims

1. Apparatus for transmitting a plurality of received wideband radio signals (6, 7), which differ in their direction of polarization and/or direction of reception and/or their frequency band, to at least one signal receiver (26, 27), where at least two of the received radio signals (6, 7) are supplied to a respective modulation apparatus (18, 19), in which the respective radio signal (6, 7) is modulated onto a prescribed carrier wavelength (λ₁, λ₂) which is respectively different for each radio signal (6, 7), for the purpose of retrospective system expansion, where the modulation apparatuses (18, 19) have at least one common transmission line (24, 25), for transmitting at least two of the modulated carrier wavelengths (λ₁, λ₂), to the at least one signal receiver (26, 27) connected downstream of them, where the carrier wavelengths (λ₁, λ₂) are in the optical wavelength range and where the at least one transmission line (24, 25) is an optical fibre, **characterized in that**, together with the radio signals (6, 7), identifier information used to identify the radio signals (6, 7) can be transmitted to the signal receiver (26, 27).

2. Apparatus according to Claim 1, **characterized in that** optical transmission means (50, 51), preferably laser diodes, are provided whose emission wavelengths are the carrier wavelengths (λ₁, λ₂), and **in that** the modulation apparatuses (18, 19) modulate the control current for the optical transmission means (50, 51).

3. Apparatus according to Claim 1 or 2, **characterized in that** the at least one transmission line (24, 25) has a star coupler (48) connected upstream of it.

4. Apparatus according to Claim 3, **characterized in that** a plurality of subscriber lines (24, 25) are provided which are connected to the output of a power divider (49), and **in that** the power divider (49) has a further optical fibre (40) connected upstream of it which is connected downstream of the star coupler (48).

5. Apparatus according to one of Claims 1 to 4, **characterized in that** the modulation apparatuses (18, 19) have at least one respective amplifier (16, 17) connected upstream of them.

6. Apparatus according to one of Claims 1 to 5, **characterized in that** the identifier information can be modulated onto the carrier wavelengths (λ₁, λ₂).

7. Signal receiver for receiving at least two carrier wavelengths (λ₁, λ₂) which are transmitted via a common transmission line (24, 25) and have been modulated with wideband radio signals (6, 7), designed such that at least one frequency-selective filter (30, 37, 42) for outputting one of the respective transmitted, modulated carrier wavelengths (λ₁, λ₂) is provided, and that the at least one frequency-selective filter (30, 37, 42) has a demodulation apparatus (31, 32) connected downstream of it which is used for demodulating the respective output, modulated carrier wavelength (λ₁, λ₂) in order to obtain the respective wideband radio signal (6, 7), and that a selection apparatus (33) is provided which can be used to select one of the wideband radio signals (6, 7), **characterized in that** at least one tuneable, frequency-selective filter (42) for outputting one of the transmitted, modulated carrier wavelengths (λ₁, λ₂) is provided, and **in that** an identifier identification device (43) connected downstream of the tuneable filter (42) can be used to recognize identifier information transmitted together with the radio signals (6, 7), and **in that** the selection apparatus (33, 44) can be used to set the tuneable filter (42) using the recognized identifier information.

## Revendications

1. Dispositif de transmission de plusieurs signaux radio (6, 7) reçus en bande large, qui se distinguent par leur direction de polarisation et/ou leur direction de réception et/ou la position de la bande de fréquence, vers au moins un récepteur de signal (26, 27), selon lequel
pour étendre ultérieurement le système on applique au moins deux des signaux radio reçus (6, 7) à un dispositif de modulation (18, 19) qui module le signal radio respectif (6, 7) sur une porteuse de longueur d'onde (λ₁, λ₂), prédéterminée, différente pour chaque signal radio (6, 7), et
les dispositifs de modulation (18, 19) se poursuivent par au moins une ligne de transmission commune (24, 25) pour la transmission au moins des deux longueurs d'ondes porteuses, de modulation (λ₁, λ₂), vers au moins un récepteur de signal (26, 27),
les longueurs d'ondes de porteuses (λ₁, λ₂) étant situées dans la plage des longueurs d'ondes optiques et
au moins une ligne de transmission (24, 25) est une fibre optique guide d'ondes,
**caractérisé en ce qu'**
avec les signaux radio (6, 7) on transmet vers le récepteur de signal (26, 27) des informations caractéristiques servant à l'identification des signaux radio (6, 7).

2. Dispositif selon la revendication 1,
**caractérisé par**
des moyens d'émissions optiques (50, 51), de préférence des diodes laser dont les longueurs d'ondes d'émission sont les longueurs d'ondes de porteuses (λ₁, λ₂) et les dispositifs de modulation (18, 19) modulent le courant de commande des éléments d'émissions optiques (50, 51).

3. Dispositif selon la revendication 1 ou 2,
**caractérisé par**
au moins un coupleur en étoile (48) en amont d'une ligne de transmission (24, 25).

4. Dispositif selon la revendication 1 ou 2,
**caractérisé par** plusieurs lignes d'abonnés (24, 25) reliées à la sortie d'un diviseur de puissance (49) et
une autre fibre optique (40) se trouve en amont du diviseur de puissance (49), cette fibre étant en aval du coupleur en étoile (48).

5. Dispositif selon l'une des revendications 1 à 4,
**caractérisé en ce que**
les dispositifs de modulation (18, 19) sont précédés chaque fois par au moins un amplificateur (16, 17).

6. Dispositif selon l'une des revendications 1 à 5,
**caractérisé en ce que**
les informations caractéristiques sont modulées sur les longueurs d'ondes de porteuses (λ₁, λ₂).

7. Récepteur de signaux pour recevoir au moins deux signaux radio (6, 7) en bandes larges, transmises par l'intermédiaire d'une ligne de transmission commune (24, 25), et modulées par les longueurs d'ondes (λ₁, λ₂) de porteuses, conçues de façon à prévoir au moins un filtre sélectif en fréquence (30, 37, 42) pour découpler l'une des longueurs d'ondes (λ₁, λ₂) de porteuses modulées, respectivement transmises et en ce que le dispositif de démodulation (31, 32) est suivi par au moins un filtre sélectif en fréquence (30, 37, 42), ce dispositif de démodulation servant à démoduler la porteuse modulée de longueur d'onde (λ₁, λ₂), respectivement découplée pour récupérer le signal radio en bande large (6, 7) et un dispositif de sélection (33) se sélectionne à l'aide de l'un des signaux radio en bandes larges (6, 7),
**caractérisé par**
au moins un filtre sélectif en fréquence (42), accordable, pour découpler l'une des porteuses modulées de longueur d'onde (λ₁, λ₂) transmises et à l'aide d'une installation d'identification de caractéristique (43), en aval du filtre accordable (42), on reconnaît les informations caractéristiques transmises avec les signaux radio (6, 7) et
avec le dispositif de sélection (33, 34) on règle le filtre accordable (42) à l'aide des informations de caractéristiques, reconnues.
